(19) Europäisches Patentamt
European Patent Office
Office européen des brevets

(11) Publication number: **0 116 300**
**B1**

(12) **EUROPEAN PATENT SPECIFICATION**

(45) Date of publication of patent specification: **14.10.87**

(51) Int. Cl.$^4$: **C 04 B 35/00**, C 08 F 8/12, C 08 F 8/28

(21) Application number: **84100324.7**

(22) Date of filing: **12.01.84**

(54) **Binder for the production of ceramic molded green bodies.**

(30) Priority: **14.01.83 JP 4472/83**

(43) Date of publication of application:
**22.08.84 Bulletin 84/34**

(45) Publication of the grant of the patent:
**14.10.87 Bulletin 87/42**

(84) Designated Contracting States:
**DE FR GB**

(56) References cited:
**DE-A-2 418 955**
**FR-A-2 394 506**
**GB-A-1 143 974**
**US-A-3 928 255**

**CHEMICAL ABSTRACTS, vol. 97, no. 10, 1982, p. 326, no. 77484w, Columbus, Ohio (US)**

**CHEMICAL ABSTRACTS, vol. 99, no. 8, 1983, p. 240, no. 57763z, Columbus, Ohio (US)**

(73) Proprietor: **KURARAY CO., LTD.**
**1621 Sakazu**
**Kurashiki-City Okayama Prefecture (JP)**

(72) Inventor: **Tanaka, Taku**
**1625 Sakazu**
**Kurashiki-city (JP)**
Inventor: **Maruyama, Hitoshi**
**417-39 Nishio**
**Kurashiki-city (JP)**
Inventor: **Okaya, Takuji**
**2-46 Umegaoka**
**Nagaokakyo-city (JP)**
Inventor: **Kajitani, Koichi**
**1652-1 Sakazu**
**Kurashiki-city (JP)**

(74) Representative: **Vossius & Partner**
**Siebertstrasse 4 P.O. Box 86 07 67**
**D-8000 München 86 (DE)**

**EP 0 116 300 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

BACKGROUND OF THE INVENTION

1. Field of the Invention

This invention relates to binders suitable for the production of ceramic molded green bodies having high strength, high density and high uniformity or binders suitable for the production of ceramic green tapes (film, sheet or the like) which are soft and have high strength and excellent surface smoothness.

2. Description of the Prior Art

Ceramic shaped articles have recently been extensively employed in various fields of application such as electronic materials, magnetic materials, optical materials, high temperature materials etc. by making the best use of their various characteristics. From these various applications, improvements in various aspects such as physical properties, shapes etc. have been eagerly sought. For example, in respect to the thermal, electric, mechanical properties etc., products having higher density and higher uniformity are desired. In the field of mechanical parts, electrical parts etc., products having large-size and more complicated shapes are more favored. In order to satisfy these demands, various studies have been made both as regards the ceramic powder used and as regards the molding methods.

Heretofore, as the method for improving the thermal electric, mechanical, optical and the like properties of ceramic products, there has been proposed a method of upgrading the purity of the ceramic powder or a method of employing a powder having a minute particle size. Where these methods are employed, when considered as regards molding, such methods bring about a decrease of plasticizing substances derived from impurities in the starting material or an increase of the particle surface area and hence require a larger amount of an organic binder.

On the other hand, when producing large-sized articles or articles with a more complicated geometrical shape is considered in an aspect of molding, the product is required to be a molded green body having higher strength when the molded green body (non-sintered product) is handled or treated. In such a case, by the conventional technique, a method of increasing the amount of an organic binder to be used has been employed.

However, the increase of the proportion of the organic binder relative to the starting ceramic powder causes the following problems:

1. Problems in debinding operation

The molded green body is subjected to a debinding operation prior to sintering, but if the amount of the organic binder is too much at that time, the amounts of heat and gas generated are large, and therefore there is a risk of cracking due to explosion etc. and it takes a longer time for debinding.

2. Problems of incorporation of impurities etc.

Addition of a large amount of an organic binder can give rise to incorporation of impurities or an increase of the carbonized residue after sintering of the molded green body, and in such a case, the purity of the product is greatly reduced.

3. Problems relating to dimensional accuracy

With the increase in the amount of the organic binder, the degree of shrinkage when the molded green body is sintered becomes greater and thus the dimensional accuracy is reduced.

In order to solve these problems, conventional binders such as polyvinyl alcohol (hereinafter referred to as PVA), methyl cellulose, vinyl acetate polymer emulsions etc. shown in the comparative examples described hereinbelow have been studied. Binders, however, which can provide high strength, high density and high uniformity molded green bodies by the addition of small amounts thereof have not been found as yet.

For producing ceramic green tape (film, sheet or the like) there has generally been employed a process which comprises dissolving a binder such as a polyvinylbutyral resin etc. in an organic solvent such as methyl ethyl ketone, butyl acetate, alcohol etc., mixing it with a ceramic powder for many hours to make it into a slurry, then deaerating it, converting it into a sheet on a carrier film using a blade having a predetermined thickness, and drying it by heating to form a green tape.

However, the conventional molding method employing organic solvents has the following problems:

(1) Harm of the organic solvent exerted on the human body.

(2) Fear of explosion and fire during handling of the organic solvent.

(3) The material cost of the organic solvent for producing green tape is expensive.

(4) It is necessary to make the production equipment explosion-proof and at the same time to provide a device for recovering the organic solvent, and thus the plant cost is expensive.

In order to solve these problems, there has been proposed a molding method of employing a water-soluble organic polymer such as PVA etc. as a binder.

However, although this method has the advantage that it can solve the above-described problems, it has the drawback that in the stage of molding a green tape, the ceramic powder tends to form a flocculate structure in an aqueous slurry and the viscosity of the slurry greatly deviates from the Newtonian flow. The

flowability of the slip and the dispersibility of the ceramic powder are poor. Thus a uniform green tape having high surface smoothness cannot be easily obtained.

On the other hand, the present situation is such that for the water-soluble polymers such as PVA, there is no plasticizer having high plasticizing efficiency, and there is also a problem that when a plasticizer such as glycerin is employed in a large amount in order to impart softness to a green tape, tackiness is brought about on the surface due to migration of the plasticizer.

## SUMMARY OF THE INVENTION

The present inventors have been studying the binder performance of various organic substances. They have found that a binder comprising a modified PVA containing either (A) hydrophobic groups having a hydrocarbon group of 4 or more carbon atoms or (A) plus (B) ionic hydrophilic groups in the side chain has good miscibility with a ceramic powder on preparation of an aqueous kneaded product and can provide a high strength molded green body in various molding methods by use of a small amount thereof. Since the amount of the binder used is small, the molded green body obtained by the process of this invention has many excellent merits as ceramic product. For example, where the molded green body is sintered, the degree of shrinkage due to sintering is small and hence the dimensional accuracy is good, the density after sintering is high and hence the quality is good.

Furthermore, the present inventors have discovered that an aqueous solution of a binder comprising the above-described modified PVA is suitable as a binder in the case of producing a ceramic green tape and that a ceramic green tape obtained by using this binder is soft and has high strength, excellent surface smoothness and a high degree of uniformity.

## DETAILED DESCRIPTION OF THE PREFERRED EMBODIMENTS

The hydrophobic groups of the modified PVA employed in this invention, are the so-called large aliphatic hydrocarbon groups containing 4 or more carbon atoms, preferably 6—20 carbon atoms, and most preferably 8—18 carbon atoms. As hydrocarbon groups alkyl groups are suitable. If the number of carbon atoms is 3 or less, the effect to yield a high strength molded green body by the use of a small amount thereof is not satisfactory. The amount of the hydrophobic groups incorporated is desirably in the range of from 0.1 mole % to 15 mole %. With the amount of less than 0.1 mole %, since the amount of the hydrophobic group is too small, a similar effect is not adequately manifested, whereas when more than 15 mole % is incorporated, good results are not always obtainable, probably because the water-solubility of the modified PVA is reduced to become water-insoluble, although somewhat depending on the amount of the hydrophilic groups described later incorporated, or the properties inherent to PVA such as film forming properties are lost. The preferred amount of the hydrophobic groups is 0.5—10 mole %.

Further, the amount of (B) the ionic hydrophilic groups incorporated in the modified PVA employed in this invention is desirably in the range of from 0 mole % to 15 mole %. Where the amount of the hydrophobic group is small, there is no problem because said modified PVA is water soluble even if ionic hydrophilic groups are not present. In the case where the amount of the hydrophobic groups is large, then it is necessary to render the system water-soluble by incorporating ionic hydrophilic groups. However, incorporation of more than 15 mole % of the ionic hydrophilic groups is useless and a mere waste of cost, because its effect has been already saturated and further improvement in performance cannot be expected. The preferred amount of the ionic hydrophilic groups is 0.5—10 mole %.

In this invention, as the method of incorporating (A) hydrophobic groups having a hydrocarbon group of 4 or more carbon atoms into the side chain of PVA, there may be mentioned first a method of copolymerizing an ethylenically unsaturated monomer having a hydrocarbon group of 4 or more carbon atoms with vinyl acetate and saponifying. In this method, as the ethylenically unsaturated monomer, there may be mentioned, for example, alkyl vinyl ethers such as butyl vinyl ether, lauryl vinyl ether, stearyl vinyl ether, isoamyl vinyl ether etc., α-olefins such as heptene-1, octene-1, docene-1, dodecene-1, tetradecene etc., straight chain aliphatic vinyl esters such as vinyl laurate, vinyl stearate, vinyl myristate, vinyl palmitate etc., branched chain aliphatic acid vinyl ester such as vinyl ester of branched chain aliphatic acid having 8 carbon atoms in said branched chain hydrocarbon, N-alkyl-substituted-(meth)acrylamides such as N-octyl-(meth)acrylamide, N-butyl(meth)acrylamide, N-dodecyl(meth)acrylamide, N-tetradecyl(meth)acrylamide etc. Branched chain aliphatic acid vinyl esters, vinyl ethers and N-alkyl-substituted-(meth)acrylamides having a hydrocarbon group of from 6 to 20 carbon atoms are preferably employed. As another method, there is a method of incorporating a hydrophobic group by post-modifying unmodified PVA, for example, a method of acetalifying unmodified PVA with an aliphatic monoaldehyde. In this invention the number of carbon atoms in the hydrocarbon group means the carbon atoms in the hydrocarbon group which constitute the side chain of said modified PVA.

Thereafter, as the method of incorporating (A) the hydrophobic group having a hydrocarbon of 4 or more carbon atoms and (B) the ionic hydrophilic group into the side chain of PVA there is a method of copolymerizing vinyl acetate with the aforesaid ethylenically unsaturated monomer having a hydrocarbon group of 4 or more carbon atoms and an ethylenically unsaturated monomer having an ionic hydrophilic group and saponifying.

The ethylenically unsaturated monomer having an ionic hydrophilic group means an ethylenically unsaturated monomer having an anionic or cationic hydrophilic group. Examples of the ethylenically

unsaturated monomer having an anionic hydrophilic group include ethylenically unsaturated carboxylic acids and salts, lower alkyl esters and anhydrides thereof such as crotonic acid, itaconic acid, monomethyl maleate, methyl acrylate, maleic anhydride etc., ethylenically unsaturated sulfonic acids and salts thereof such as vinylsulfonic acid, allylsulfonic acid salts, N-(meth)acrylamidopropanesulfonic acid salts etc.

Examples of the ethylenically unsaturated monomer having a cationic hydrophilic group are monomers of the following formulae (I), (II) and (III):

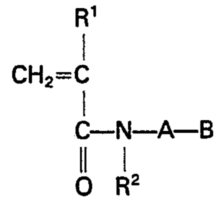

(I)

wherein

$R^1$ and $R^2$ each represent a hydrogen atom or a lower alkyl group

A is a group connecting the nitrogen atom in B and the nitrogen atom in the amido group, and

B is 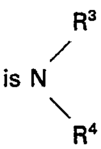 or 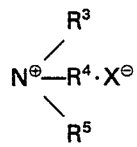 ,

wherein

$R^3$, $R^4$ and $R^5$ each represents a hydrogen atom or a lower alkyl group which may be optionally substituted and $X^\ominus$ is an anion;

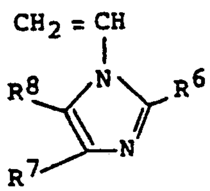

(II)

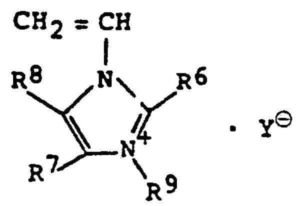

(III)

wherein

$R^6$, $R^7$, $R^8$ and $R^9$ each represent a hydrogen atom or a lower alkyl group or phenyl group, and

$Y^\ominus$ is an anion. The term lower alkyl group denotes a group containing 1 to 6, preferably 1 to 4 and most preferably 1 to 2 carbon atoms.

Specific examples thereof include N-(1,1-dimethyl-3-dimethylaminopropyl)acrylamide, trimethyl-3-(1-acrylamido-1,1-dimethylpropyl)ammonium chloride, N-(1,1-dimethyl-3-dimethylaminobutyl)acrylamide, trimethyl-3-(1-acrylamido-1,1-dimethyl)ammonium chloride, N-(1-methyl-1,3-diphenyl-3-diethylaminopropyl)methacrylamide, N-(3-dimethylaminopropyl)acrylamide, trimethyl-3-(1-acrylamidopropyl)-ammonium chloride, N-(3-dimethylaminopropyl)methacrylamide, trimethyl-3-(1-methacrylamidopropyl)-ammonium chloride, 1-vinylimidazole, 1-vinyl-2-methylimidazole, 1-vinyl-2-ethylimidazole, 1-vinyl-2-phenylimidazole, 1-vinyl-2,4-dimethylimidazole, 1-vinyl-2,4,5-trimethylimidazole and quaternarized salts of these imidazoles.

Another method of incorporating ionic hydrophilic groups into the side chain of PVA is a method of incorporating it by post-modification, for example, a method of reacting PVA with sulfuric acid, chlorosulfonic acid etc. to esterify it, etc.

Further methods of incorporating hydrophobic groups and ionic hydrophilic groups into the side chain of PVA are a method of incorporating both groups by post-modification, a method of incorporating the hydrophobic group into a copolymer saponified product of vinyl acetate and an ethylenically unsaturated monomer having an ionic hydrophilic group, etc.

The degree of saponification of the modified PVA employed in this invention is not particularly

restricted, and the water-soluble range will suffice. The prefered degree of saponification of the modifed PVA is in the range of 80 to 99.5 mole %, most preferably 88 to 98.5 mole %. The degree of polymerization is generally suitably in the range of 100—3000, preferably 200—2000.

Where the modified PVA of this invention is employed as the binder, examples of the molding method by which the binder characteristics can manifest include methods having an aqueous kneaded product in the molded step, such as press molding, extrusion molding, tape molding, slurry molding etc. The aqueous kneaded product as herein used means a system which comprises the starting ceramic powder, water and a binder and further contains, depending on the necessity, additives such as a deflocculating agent, a plasticizer, a lubricant etc. In addition, an organic solvent may safely be present in an amount not causing a problem associated with the dissolution of the modified PVA.

Especially, in the press molding method which comprises drying the aqueous kneaded product to a granulate of a suitable particle size, feeding it to a suitable mold, and pressing it to achieve molding, the brittleness of the granulate and the transmittance of the pressure become very severe problems, but with the modified PVA of this invention, probably since the modified PVA itself has lubricating properties, it exerts a very high effect in press molding.

The shapes of the ceramic molded green body in this invention are tape (sheet), plate, pipe and other various shapes.

Where the modified PVA employed in this invention is to be used as a powder, although the suitable amount to be added depends on the kind of the powder, the effect is manifested by using it in the range of 0.1—20 parts by weight, preferably 0.2—15 parts by weight, per 100 parts by weight of the powder. Further, the modified PVA is preferably blended with the ceramic powder in the form of an aqueous solution.

While this invention is characterized by employing the aforesaid modified PVA as the binder, this may also be employed in the combination with a deflocculating agent, a lubricant, a plasticizer etc. Further, another binders may also be employed in combination. The deflocculating agent as herein used is a commonly employed deflocculating agent, and examples thereof include inorganic deflocculating agents such as sodium phosphate, sodium hydroxide, sodium citrate, sodium linolate etc., and organic deflocculating agents such as amines, pyridine, piperidine, metal salts or ammonium salt of polyacrylic acid, polyoxyethylene nonyl phenol ether etc. The preferred amount of the deflocculating agent incorporated is 0.05—5% by weight based on the ceramic powder. On the other hand, as the plasticizer, for example, glycols, polyethylene glycol, glycerin, triols etc. may be employed. The preferred amount of the plasticizer incorporated is 0—10% by weight based on the ceramic powder. Further, the lubricant may be conventional one, and examples thereof included natural wax such as bee wax, vegetable wax etc., synthetic wax such as paraffin wax, microcrystalline wax, low molecular weight polyethylene and its derivatives etc., fatty acids such as stearic acid, lauric acid etc., metal salts of fatty acids such as magnesium stearate, calcium stearate etc., fatty acid amides such as oleic acid amide, stearic acid amide etc., polyethylene glycol, etc., and they may be in the form of an aqueous dispersion. The preferred amount of the lubricant incorporated is 0—10% by weight based on the ceramic powder. The binder employed in combination with the modified PVA employed in this invention may be any as long as it does not interfere with the action and effect of this invention. For example, starches, sugars and their derivatives, rubbery polymers, soluble proteins, cellulose derivatives, synthetic water-soluble polymers such as PVA, polyvinylpyrrolidone, polyacrylic acid amide, isobutylene — maleic anhydride copolymers, homopolymers and copolymers of acrylic acid, methacrylic acid and their esters, etc. may be employed. It is also possible to employ an aqueous dispersion of a polymer of one or more monomers, for example, olefins such as ethylene, propylene, isobutylene, 1-hexene etc., diolefins such as butadiene, isoprene etc, vinyl esters such as vinyl propionate, vinyl acetate, vinyl stearate etc., vinyl ethers such as stearyl vinyl ether, lauryl vinyl ether etc., unsaturated carboxylic acids such as acrylic acid, methacrylic acid, crotonic acid, maleic acid, itaconic acid etc. and their esters, styrene etc. The aqueous dispersion of these polymers may be obtained by emulsion polymerization or suspension polymerization of the aforesaid monomers. In particular, when emulsion polymerization is conducted, the aqueous dispersion of a polymer obtained by employing the modified PVA as a protective colloid is preferably PVA employed as the protective colloid in this case is 5—2000 parts by weight, preferably 10—1000 parts by weight, per 100 parts by weight of the monomer.

The ceramic powder for which the modified PVA of this invention is employed is a metal oxide or non-oxide powder, or non-metal oxide or non-oxide powder usable in the ceramic production. Further, the composition of these powders may be either a single composition or in a compound form and they may be employed either singly or in combination thereof. The constituting element of the metal oxide or non-oxide may consist of either a single element or a plurality of elements whether cationic or anionic, and a system containing additives added for improving the characteristics of the oxide or non-oxide may also be employed in this invention.

Specific examples thereof include oxides, carbides, nitrides, borides, sulfides etc. of Li, K, Be, Mg, B, Al, Si, Cu, CA, Sr, Ba, Zn, Cd, Ga, In, lanthanides, actinides, Ti, Zr, Hf, Bi, V, Nb, Ta, W, Mn, Fe, Co, Ni etc. Further, specific examples of oxides powders containing a plurality of metal elements which are generally called double oxides are classified according to the crystal structure, then there are those taking a perovskite structure such as $NaNbO_3$, $SrZrO_3$, $PbZrO_3$, $SrTiO_3$, $BaZrO_3$, $PbTiO_3$, $BaTiO_3$ etc., those taking a spinel structure such as $MgAl_2O_4$, $ZnAl_2O_4$, $CoAl_2O_4$, $NiAl_2O_4$, $MgFe_2O_4$ etc., those taking an ilmenite

structure such as $MgTiO_3$, $MnTiO_3$, $FeTiO_3$ etc., and those taking a garnet structure such as $Gd_2Ga_5O_{12}$, $Y_3Fe_5O_{12}$ etc.

The modified PVA employed in this invention is effective regardless of the particle diameter and shape of the above-described ceramic powder, but since the more minute the powder becomes, the more important the problem of pelletization becomes, its effectiveness is even further better manifested especially on the ceramic powder having an average particle diameter of 20 μm or less.

Among these ceramic powders, the modified PVA employed in this invention is suitably applied to the oxide powders, particularly, metal oxide powders for producing electronic materials, magnetic materials, optical materials, high temperature materials etc.

By sintering the ceramic molded green body thus obtained under the conventional conditions, or by sintering the ceramic molded green body after cutting, machining or drilling said green body so as to form a desired shape, a porcelain product excellent in strength etc. may be obtained.

This invention is described in more detail by the following examples and comparative examples, but it should be noted that this invention is not restricted to these examples. All the parts in the examples mean parts by weight unless otherwise specified.

## Example 1

Production of Modified PVA (A)

770 parts of vinyl acetate, 1370 parts of methyl alcohol and 25.1 parts of lauryl vinyl ether were charged into a polymerizing vessel and polymerized in the conventional manner. After removing the unreacted vinyl acetate the polymer is saponified using sodium hydroxide.

The obtained PVA was reacted with chlorosulfonic acid in a pyridine medium, and then neutralized to obtain a modified PVA (A). From the assay results, said modified PVA contains 0.9% of lauryl ether groups, 1.0 mole % of sulfonic acid ester groups, and has a saponification degree of 99.1%, a polymerization degree of 650, and a viscosity as a 4% aqueous solution at 20°C of 10 centipoise (0,1 Pa.s).

Press Molding

0.3 part of polyacrylic acid ammonium salt was added as a deflocculating agent to 100 parts of an alumina powder (99.8% purity) and 100 parts of water and pulverized in a ball mill for 90 hours, after which it was mixed thoroughly with 2 parts calculated as solids of an aqueous solution of the modified PVA (A), 1.5 parts of a stearic acid emulsion and 1 part of glycerin. This slurry was pelletized by spray drying. The obtained pelletized product (granules) was of a spherical form approaching the real spheres and had good flowability. These granules were pressed by a isostatic pressure press to obtain a cylindrical molded green body having an inner diameter of 15 mm, a length of 500 mm and a thickness of 5 mm. At that time, adhesion to the mold for molding did not occur and it was easy to release the green body from the mold. The surface of the molded green body was observed on a microscope, to find that the granules had been adequately smashed. When the strength of the molded green body was evaluated by a bending test, the strength was much greater than in the case where the unmodified PVA was employed as a binder in Comparative Example 1 described below. Further, cutting and drilling of this molded article were easy.

## Comparative Example 1

Similar procedures were conducted except that the modified PVA (A) of example 1 was replaced by an unmodified PVA (degree of saponification: 88 mole %; degree of polymerization: 1700) (Kurary Poval 217). As described above, the strength was much lower than that obtained by employing the modified PVA (A) of Example 1. Further, the cutting and drilling of the molded green body were difficult.

## Example 2

Production of Modified PVA (B)

2100 parts of vinyl acetate, 55 parts of a branched chain aliphatic acid vinyl ester [VeoVa-10] (trade mark) produced by Shell Chemical Co., formula

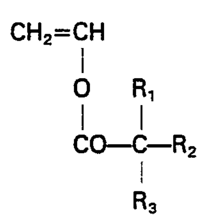

the total carbon atoms in $R_1$, $R_2$ and $R_3$ which each is alkyl are 8), 3600 parts of methyl alcohol and 58 parts of sodium allylsulfonate were polymerized in the conventional manner. Then the unreacted vinyl acetate was removed, and the obtained polymer solution was saponified using sodium hydroxide. The obtained modified PVA contained 1.2 mole % of hydrocarbon groups (versatic acid ester moiety) and 2.0 mole % of sulfonic acid groups and had a degree of saponification of 97.8 mole %, a degree of polymerization of 550 and a viscosity in 4% aqueous solution at 20°C of 7 centipoise (0,07 Pa·s).

Press Molding

100 parts of alumina (99.8% purity), 50 parts of water and 0.3 part of a polyacrylic acid ammonium salt deflocculating agent were ground in a ball mill for 90 hours, and modified PVA (B) aqueous solution was added in an amount of 2 parts as solids and mixed uniformly with the powder. Granules (particle diameter 100 ± 20 μm) were prepared from this slurry, and molded into a rectangular form of a width of 20 mm, a length of 100 mm and a thickness of 10 mm by pressing (1.2 ton/$cm^2$) using a mold. The results of evaluation are shown in Table 1.

Comparative Example 2

Similar molding was conducted by replacing the binder in Example 2 by an unmodified PVA (degree of saponification: 88 mole %; degree of polymerization: 500) (Kuraray Poval 205), methyl cellulose and a vinyl acetate emulsion, respectively. The results of evaluation are shown in Table 1.

Example 3

Various modifications were conducted according to the process for the production of the modified PVA in Example 2 to prepare modified PVA (C)—(K), and they were used as binders. Molding was conducted in a similar manner as in Example 2. The results of evaluation are summarized in Table 1.

TABLE 1

Binders and their Molding Properties and Physical Properties of Molded Green Body

| | | | Modified PVA | | | | Molding Properties | | | |
|---|---|---|---|---|---|---|---|---|---|---|
| | Sample No. | Binder | Monomer Incorporating Hydrophobic Group | Monomer Incorporating Hydrophilic Group | Hydrophobic Group (mole %) | Hydrophilic Group (mole %) | Release Properties | Uniformity | Strength of Molded Green Body* (Toughness) | Workability** |
| Example 2 | 3 | Modified PVA (B) | Veova-10 | Sodium allylsulfonate | 1.2 | 2.0 | ○ | ○ | 3.0 | ○ |
| Example 3 | 4 | PVA (C) | Veova-10 | Itaconic acid | 0.7 | 0 | ○ | ○ | 1.1 | Δ |
| | 5 | PVA (D) | " | " | 1.0 | 1.0 | ○ | ○ | 1.5 | ○ |
| | 6 | PVA (E) | " | " | 3.0 | 1.0 | ○ | ○ | 3.9 | ○ |
| | 7 | PVA (F) | " | " | 4.0 | 3.0 | ○ | ○ | 8.5 | ○ |
| | 8 | PVA (G) | " | " | 4.0 | 6.0 | ○ | ○ | 6.0 | ○ |
| | 9 | PVA (H) | Heptene | Maleic anhydride | 2.0 | 1.0 | ○ | ○ | 1.3 | ○ |
| | 10 | PVA (I) | Stearyl vinyl ether | " | 1.2 | 1.0 | ○ | ○ | 2.1 | ○ |
| | 11 | PVA (J) | Veova-10 | Trimethyl-3-(1-methacrylamidopropyl)ammonium chloride | 2.0 | 1.0 | ○ | ○ | 2.3 | ○ |
| | 12 | PVA (K) | Octylacrylamide | Maleic anhydride | 3.0 | 1.0 | ○ | ○ | 2.8 | ○ |

TABLE 1 (continued)

Binders and their Molding Properties and Physical Properties of Molded Green Body

| | | | Modified PVA | | | | Molding Properties | | | |
|---|---|---|---|---|---|---|---|---|---|---|
| | Sample No. | Binder | Monomer Incorporating Hydrophobic Group | Monomer Incorporating Hydrophilic Group | Hydro-phobic Group (mole %) | Hydro-philic Group (mole %) | Release Properties | Uniformity | Strength of Molded Green Body* (Toughness) | Worka-bility** |
| Compara-tive Example 2 | 13 | PVA—205 | — | — | — | — | ○ | × | 1.0 | Δ |
| | 14 | Methyl cellulose | — | — | — | — | Δ | × | 1.0 | Δ |
| | 15 | Vinyl acetate polymer emulsion | — | — | — | — | Δ | × | 0.3 | × |

*Strength of Molded Green Body: This was conducted by a three-point bending test, the energy required for breaking the molded green body (toughness) was determined from the s—s curve, and expressed relative to the toughness, taken as 1.0, of the molded green body when PVA—205 was employed as the binder.

**Workability was evaluated by the degree of difficulty by conducting cutting with a knife and drilling with a drill.

○: Working is easy.
Δ: Working is difficult.
×: Working is very difficult.

Example 4

Conventional procedures were conducted to obtain a modified PVA which was polyvinyl acetate ester type copolymer containing 3.5 mole % of [VeoVa-10] as a hydrophobic component and 1.5 mole % of itaconic acid as an ionic hydrophilic component, 93 mole % of its vinyl acetate ester component having been saponified, its degree of polymerization being 700 and its viscosity in 4% aqueous solution being 32 centipoise (0.32 Pa·s).

100 Parts of an alumina powder (average particle diameter: 1.5 µm; 96% purity) was mixed with 6 parts of the aforesaid PVA as a binder, 3 parts of glycerin as a plasticizer, 1 part of polyoxyethylene nonyl phenol ether (HLB value 17.5) as a dispersant and 50 parts of deionized water, and kneaded in a ball mill to obtain an aqueous slurry. Air bubbles within the slurry were removed by a vacuum defoaming device to obtain a uniform slurry. The slurry viscosity was adjusted, and it was drawn into a sheet form on a polyester sheet using a blade having a predetermined clearance to produce a green tape.

The aqueous slip had good flowability, and the obtained tape was rich in flexibility and elasticity, easy to handle and had a smooth surface. Further, troubles due to migration of the plasticizer were not observed.

When said green sheet was sintered at 1600°C, a porcelain comparable to or better than that obtained by the conventional process (organic solvent system) of Comparative Example 3, as shown in Table 2.

Comparative Example 3

100 Parts of an alumina powder (average particle diameter: 1.5 µm; 96% purity) was mxied with 8 parts of polyvinyl butylal (PVB) as a binder, 3 parts of dibutyl phthalate (DBP) as a plasticizer, 2 parts of purified sardine oil as a dispersant and 26 parts of cyclohexanone, 10 parts of ethanol and 14 parts of toluene as solvents. A green tape was obtained by similar procedures as in Example 4. The evaluation of the physical properties are shown in Table 2.

TABLE 2

| Sample No. | 16 | 17 |
|---|---|---|
| | Example 4 | Comparative Ex. 3 |
| Binder | Modified PVA | PVB |
| Plasticizer | Glycerin 3 pts. | DBP 3 pts. |
| Dispersant | Polyoxyethylene nonyl phenol ether 1 pt. | Purified sardine oil 2 pts. |
| Density of Green Tape (g/cm$^3$) | 2.30 | 2.12 |
| Surface Roughness after Sintering (µm) | 0.35 | 0.41 |
| Apparent Specific Gravity after Sintering (g/cm$^3$) | 3.77 | 3.74 |

Example 5

Production of Binder

A polyvinyl acetate type copolymer containing 4.0 mole % of [VeoVa-10] as a hydrophobic component and 3.0 mole % of itaconic acid as a hydrophilic component was obtained. The polymer was saponified to obtain a modified PVA, 96.5% of the vinyl acetate moiety of which had been saponified, and its degree of polymerization is 450. Its viscosity as a 4% aqueous solution at 20°C was 8.0 centipoise (0,08 Pa·s).

Thereafter, 100 parts of the aforesaid PVA and 860 parts of deionized water were charged into an autoclave equipped with an electromagnetic rotary stirrer and a temperature controllable jacket, and the temperature was raised while stirring to dissolve it. After cooling, 400 parts of vinyl acetate monomer was added to this system while stirring and further while the pressure was being adjusted to 45 kg/cm$^2$ by the introduction of ethylene gas, the temperature inside the system was reaised to 60°C. At a temperature of 60°C, a hydrogen peroxide aqueous solution and a sodium pyrosulfite aqueous solution were added, and emulsion polymerization was effected for 3 hours. At the end of the polymerization, the pH was adjusted to 6.0 with an ammonia water. The obtained ethylene — vinyl acetate copolymer copolymer aqueous dispersion contained no coagulated substances, and was an aqueous dispersion having a solids

concentration of 35.6%, an ethylene content of 14.8% by weight and good in mechanical stability and storage stability.

Tape Molding

100 Parts of an alumina powder (average particle diameter 2 μm; 96% purity) was mixed with 6 parts calculated as solids of the aforesaid binder, 0.1 part of glycerin and 0.5 part of dibutyl phthalate as plasticizers, 0.5 part of polyoxyethylene nonyl phenol ether (HLB value 17.5) as a dispersant and 25 parts of deionized water.

This starting material mixture was placed in an alumina ball mill, and by using alumina balls in an amount of about 2 times in volume that of the total starting materials, kneading was conducted for about 20 hours to obtain an aqueous slurry. Air bubbles within the slurry were removed by a vacuum defoaming device to obtain a uniform slurry. The viscosity of the slurry was adjusted, and it was drawn into a sheet form on a polyeser sheet using a blade having a predetermined clearance to produce a green tape.

The resulting aqueous slurry was obtained as a uniform dispersion having good flowability, and the obtained tape was rich in flexibility and elasticity, strong and easy to handle, and had a smooth surface.

When said green tape was sintered at 1600°C, and excellent porcelain product was obtained as shown in Table 3.

Example 6

Production of Binder

A polyvinyl acetate ester type copolymer containing 1 mole % of lauryl vinyl ether as a hydrophobic component and 2 mole % of itaconic acid as a hydrophilic component, and this was saponified to obtain a modified PVA, 97.6% of the vinyl acetate component of which had been saponified, and its degree of polymerization is 650. The viscosity of this modified PVA as a 4% aqueous solution at 20°C was 20 centipoise. 100 Parts of this modified PVA and 1.0 part of disodium phosphate were dissolved in 600 parts of water, and kept at 65°C. By adding 16 parts of butyl methacrylate and 10 parts of a 5% aqueous solution of ammonium persulfate in $N_2$ atmosphere, the polymerization was started. For 2 hours from 15 minutes after the start, 100 parts of butyl methacrylation was added continuously to effect the polymerization. After completion of the addition, the internal temperature was kept at 65°C for an hour, then cooled, and the product was removed. A clean polymer emulsion was obtained containing no coarse particles, and it was stable even after standing for 3 months.

Tape Molding

100 parts of an alumina powder (average particle diameter 2 μm; 96% purity) was mixed with 6 parts calculated as solids of the aforesaid binder, 0.5 part of 3-methyl pentan-1,3,5-triol (MPT) as a plasticizer, 0.7 of dioctyl phthalate (DOP), 0.5 part of polyoxyethylene nonyl phenol ether (HLB value 17.5) as a dispersant and 25 parts of deionized water.

By similar procedures as in Example 5, a green tape was produced.

The aqueous slurry had good flowability, and the tape obtained from said aqueous slurry was rich in flexiblity and elasticity, strong and easy to handle, and had a smooth surface. The evaluation of the physical properties are shown in Table 3.

TABLE 3

| Sample No. | 18 | 19 |
|---|---|---|
| | Example 5 | Example 6 |
| Binder | Binder of Ex. 5 | Binder of Ex. 6 |
| Plasticizer | Glycerin 0.1 pt.<br>DBP 0.5 pt. | MPT 0.5 pt.<br>DOP 0.7 pt. |
| Dispersant | Polyoxyethylene nonyl phenyl ether 1 pt. | Same as the left 1 pt. |
| Solvent | Ion exchanged water 25 pts. | Same as the left 25 pts. |
| Density of Green Tape ($g/cm^3$) | 2.31 | 2.30 |
| Surface Roughness after Sintering (μm) | 0.35 | 0.38 |
| Apparent Specific Gravity after Sintering ($g/cm^3$) | 3.76 | 3.75 |

**Claims**

1. A binder for the production of ceramic molded green bodies which comprises a modified polyvinyl alcohol containing either (A) hydrophobic groups having a hydrocarbon group with 4 or more carbon atoms or (A) plus (B) ionic hydrophilic groups in the side chain.

2. The binder according to Claim 1 wherein the hydrophobic group having a hydrocarbon group of 4 or more carbon atoms is a hydrophobic group generated from polymeriization units of at least one monomer selected from the group consisting of an aliphatic acid vinyl ester, an alkyl vinyl ether, an N-alkyl(meth)-acrylamide and an α-olefin.

3. The binder according to Claim 1 wherein the hydrophobic group having a hydrocarbon group of 4 or more carbon atoms is a hydrophobic group generated from a branched chain aliphatic acid vinyl ester.

4. The binder according to Claim 1 wherein the hydrophobic group having a hydrocarbon group of 4 or more carbon atoms is a hydrophobic group having a hydrocarbon group of 6—20 carbon atoms.

5. The binder according to Claim 1 wherein the hydrophobic group having a hydrocarbon group of 4 or more carbon atoms is a hydrophobic group having a hydrocarbon group of 8—18 carbon atoms.

6. The binder according to Claim 1 wherein the ionic hydrophilic group is an anionic hydrophilic group generated from polymerization units of at least one monomer selected from the group consisting of an ethylenically unsaturated carboxylic acid and a salt thereof, lower alkyl ester and anhydride thereof and an ethylenically unsaturated sulfonic acid and a salt thereof.

7. The binder according to Claim 1 wherein the ionic hydrophilic group is a cationic hydrophilic group generated from polymerization units of at least one monomer having the following formula (I), (II) or (III):

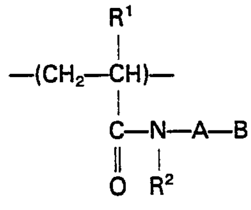

(I)

wherein

$R^1$ and $R^2$ each represent a hydrogen atom or a lower alkyl group,

A is a group connecting the nitrogen atom in B and the nitrogen atom in the amide group, and

B is 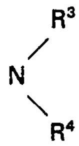 or 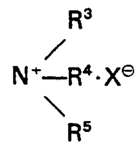,

wherein

$R^3$, $R^4$ and $R^5$ each represents a hydrogen atom or a lower alkyl group which may be optionally substituted, and

$X^{\ominus}$ is an anion;

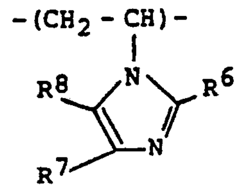

(II)

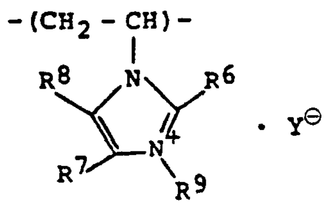

(III)

wherein

$R^6$, $R^7$, $R^8$ and $R^9$ each represents a hydrogen atom or a lower alkyl group or phenyl group, and

$Y^{\ominus}$ is an anion.

8. The binder according to Claim 1 wherein the hydrophobic group having a hydrocarbon group of 4 or more carbon atoms is a hydrophobic group generated from a branched chain aliphatic acid vinyl ester and the ionic hydrophilic group is an anionic hydrophilic group generated from an ethylenically unsaturated carboxylic acid.

9. The binder according to Claim 1 wherein the modified polyvinyl alcohol contains 0.1—15 mole % of hydrophobic groups having a hydrocarbon group of 4 or more carbon atoms.

10. The binder according to Claim 1 wherein the modified polyvinyl alcohol contains 0.1—15 mole % of hydrophobic groups having a hydrocarbon group of 4 or more carbon atoms and 0.5—10 mole % of an ionic hydrophilic group.

11. The binder according to Claim 1 wherein the modified polyvinyl alcohol has a polymerization degree of 100—3000 and a saponification degree of 80—99.5 mole %.

12. The binder according to Claim 1 wherein the ceramic molded green body is a ceramic green tape obtained by tape molding.

13. The binder according to Claim 1 wherein the ceramic molded green body is a ceramic molded green body obtained by press molding.

14. The binder according to Claim 1 wherein the ceramic molded green body is a ceramic green body obtained by extrusion molding.

15. A composition for producing ceramic molded articles which comprises 100 parts of ceramic powder and 0.1 to 20 parts of a binder which comrpises a modified polyvinyl alcohol containing either (A) hydrophobic groups with 4 or more carbon atoms (A) plus (B) ionic hydrophilic groups in the side chain according to claim 1.

**Patentansprüche**

1. Bindemittel zur Herstellung von keramischen grünen Formteilen, enthaltend einen modifizierten Polyvinylalkohol, der entweder (A) hydrophobe Gruppen mit einer Kohlenwasserstoffgruppe mit vier oder mehr Kohlenstoffatomen oder (A) plus (B) ionische hydrophile Gruppen in der Seitenkette enthält.

2. Bindemittel nach Anspruch 1, die hydrophobe Gruppe mit einer Kohlenwasserstoffgruppe mit vier oder mehr Kohlenstoffatomen eine hydrophobe Gruppe ist, die durch Polymerisation von mindestens einem Monomer aus der Gruppe der aliphatischen Carbonsäurevinylester, Alkylvinyläther, N-Alkyl(meth)-acrylamide und α-Olefine hergestellt worden ist.

3. Bindemittel nach Anspruch 1, die hydrophobe Gruppe mit einer Kohlenwasserstoffgruppen mit vier oder mehr Kohlenstoffatomen eine hydrophobe Gruppe ist, die aus einem verzweigtkettigen aliphaischen Carbonsäurevinylester hergestellt worden ist.

4. Bindemittel nach Anspruch 1, die hydrophobe Gruppe mit einer Kohlenwasserstoffgruppen mit 4 oder mehr Kohlenstoffatomen eine hydrophobe Gruppe ist, die eine Kohlenwasserstoffgruppe mit 6 bis 20 Kohlenstoffatomen aufweist.

5. Bindemittel nach Anspruch 1, die hydrophobe Gruppe mit einer Kohlenwasserstoffgruppe mit 4 oder mehr Kohlenstoffatomen eine hydrophobe Gruppe ist, die eine Kohlenwasserstoffgruppe mit 8 bis 18 Kohlenstoffatomen aufweist.

6. Bindemittel nach Anspruch 1, wobei die ionische hydrophile Gruppe eine anionische hydrophile Gruppe ist, die aus Polymerisationseinheiten von mindestens einem Monomer aus der Gruppe der olefinisch ungesättigten Carbonsäuren und ihren Salzen, deren niederen Alkylestern und Anhydriden und olefinisch ungesättigten Sulfonsäuren und ihren Salzen hergestellt worden ist.

7. Bindemittel nach Anspruch 1, wobei die ionisch hydrophole Gruppe eine kationische hydrophile Gruppe ist, die erzeugt worden ist aus Polymerisationseinheiten von mindestens einem Monomer der Formel (I), (II) oder (III):

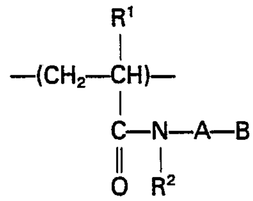

(I)

in der $R^1$ und $R^2$ jeweils ein wasserstoff atom oder einen niedere Alkylrest bedeuten, A eine Gruppe ist, die das Stickstoffatom in B und das Stickstoffatom in der Amidgruppe verbindet und B die Gruppe

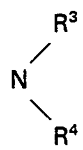

oder

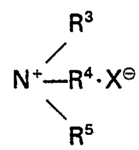

,

ist, wobei $R^3$, $R^4$ und $R^5$ jeweils ein Wasserstoffatom oder einen gegebenenfalls substituierten niederen niederen Alkylrest bedeuten und $X^\ominus$ ein Anion ist,

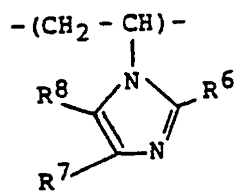

(II)

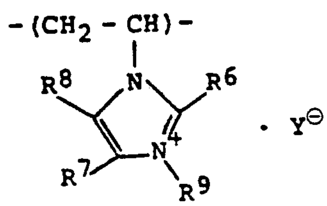

(III)

in der $R^6$, $R^7$, $R^8$ und $R^9$ jeweils ein Wasserstoffatom oder einen niederen alkylrest oder eine Phenylgruppe bedeuten und $Y^\ominus$ ein Anion ist.

8. Bindemittel nach Anspruch 1, wobei die hydrophobe Gruppe mit einer Kohlenwasserstoffgruppe mit 4 oder Kohlenstoffatomen eine hydrophobe Gruppe ist, die aus einem verzweigtkettigen aliphatischen Carbonsäurevinylester erzeugt worden ist und die ionische hydrophile Gruppe eine anionische hydrophile Gruppe ist, die aus einer olefinisch ungesättigten Carbonsäure erzeugt worden ist.

9. Bindemittel nach Anspruch 1, wobei der modifizierte Polyvinylalkohol 0,1 bis 15 Molzprozent hydrophobe Gruppen enthält, die eine Kohlenwasserstoffgruppe mit 4 oder mehr Kohlenstoffatomen aufweisen.

10. Bindemittel nach Anspruch 1, wobei der modifizierte Polyvinylalkohol 0,1 bis 15 Molzprozent hydrophobe Gruppen enthält, die eine Kohlenwasserstoffgruppe mit 4 oder mehr Kohlenstoffatomen und 0,5 bis 10 Molprozent ener ionische hydrophilen Gruppe aufweisen.

11. Bindemittel nach Anspruch 1, wobei der modifizierte Polyvinylalkohol einen Polymerisationsgrad

von 100 bis 3000 und einen Verseifungsgrad von 80 bis 99,5 Molprozent aufweist.

12. Bindemittel nach Anspruch 1, wobei das keramische grüne Formteil ein keramisches grünes Band ist, das durch Bandverformen erhalten worden ist.

13. Bindemittel nach Anspruch 1, wobei das keramische grüne Formteil ein keramisches grünes Formteil ist, das durch Preßverformen erhalten worden ist.

14. Bindemittel nach Anspruch 1, wobei das keramische grüne Formteil ein keramisches grünes Formteil ist, das durch Extrudierverformen erhalten worden ist.

15. Masse zur Herstellung keramischer Formteile, enthaltend 100 Teile keramisches Pulver und 0,1 bis 20 Teile eines Bindemittels, das einen modifizierten Polyvinylalkohol enthält, der entweder (A) hydrophobe Gruppen mit 4 oder mehr Kohlenstoffatomen oder (A) plus (B) ionische hydrophile Gruppen in der Seitenkette gemäß Anspruch 1 enthält.

**Revendications**

1. Liant pour la production de corps en céramique moulés verts, caractérisé en ce qu'il comprend un alcool polyvinylique modifié contenant soit (A) des groupes hydrophobes ayant un groupe hydrocarboné avec 4 atomes de carbone ou plus, soit (A) plus (B) des groupes ioniques hydrophiles sur la chaîne latérale.

2. Liant selon la revendication 1, caractérisé en ce que le groupe hydrophobe ayant un groupe hydrocarboné de 4 atomes de carbone ou plus est un groupe hydrophobe provenant de motifs de polymérisation d'au moins un monomère choisi dans le groupe constitué par un ester vinylique d'acide aliphatique, un éther d'alcoyle et de vinyle, un N-alcoyl(méth)acrylamide et une α-oléfine.

3. Liant selon la revendication 1, caractérisé en ce que le groupe hydrophobe ayant un groupe hydrocarboné de 4 atomes de carbone ou plus est un groupe hydrophobe provenant d'un ester vinylique d'acide aliphatique à chaîne ramifiée.

4. Liant selon la revendication 1, caractérisé en ce que le groupe hydrophobe ayant un groupe hydrocarboné de 4 atomes de carbone ou plus est un groupe hydrophobe ayant un groupe hydrocarboné de 6 à 20 atomes de carbone.

5. Liant selon la revendication 1, caractérisé en ce que le groupe hydrophobe ayant un groupe hydrocarboné de 4 atomes de carbone ou plus est un groupe hydrophobe ayant un groupe hydrocarboné de 8 à 18 atomes de carbone.

6. Liant selon la revendication 1, caractérisé en ce que le groupe ionique hydrophile est un groupe anionique hydrophile provenant de motifs de polymérisation d'au moins un monomère choisi dans le groupe constitué par un acide carboxylique à insaturation éthylénique et un sel de celui-ci, un ester d'alcoyle inférieur et un anhydride de celui-ci et un acide sulfonique à insaturation éthylénique et un sel de ce dernier.

7. Liant selon la revendication 1, caractérisé en ce que le groupe ionique hydrophile est un groupe cationique hydrophile provenant de motifs de polymérisation d'au moins un monomère ayant la formule suivant (I), (II) ou (III):

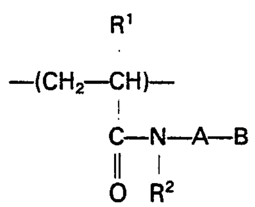

(I)

dans laquelle

$R^1$ et $R^2$ représentent chacun un atome d'hydrogène ou un groupe alcoyle inférieur,

A est un groupe reliant l'atome d'azote de B et l'atome d'azote du groupe amide et

B est 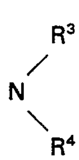 ou 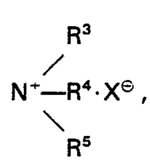 ,

dans laquelle

$R^3$, $R^4$ et $R^5$ représentent chacun un atome d'hydrogène ou un groupe alcoyle inférieur qui peut être substitué le cas échéant, et

$X^{\ominus}$ est un anion;

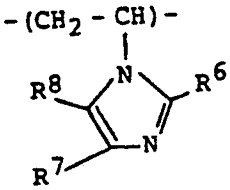

(II)

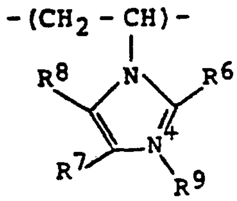

· $Y^{\ominus}$

(III)

dans lesquelles

$R^6$, $R^7$, $R^8$ et $R^9$ représentent chacun un atome d'hydrogène ou un groupe alcoyle inférieur ou un groupe phényle et

$Y^{\ominus}$ est un anion.

8. Liant selon la revendication 1, caractérisé en ce que le groupe hydrophobe ayant un groupe hydrocarboné de 4 atomes de carbone ou plus est un groupe hydrophobe provenant d'un ester vinylique d'acide aliphatique à chaîne ramifiée et le groupe hydrophile ionique est un groupe hydrophile anionique provenant d'un acide carboxylique à insaturation éthylénique.

9. Liant selon la revendication 1, caractérisé en ce que 1, caractérisé en ce que l'alcool polyvinylique modifié contient 0,1 à 15 % molaires de groupes hydrophobes ayant un groupe hydrocarboné de 4 atomes de carbone ou plus.

10. Liant selon la revendication 1, caractérisé en ce que 1, caractérisé en ce que l'alcool polyvinylique modifié contient 0,1 à 15 % molaires de groupes hydrophobes ayant un groupe hydrocarboné de 4 atomes de carbone ou plus et 0,5 à 10% molaires d'un groupe ionique hydrophile.

11. Liant selon la revendication 1, caractérisé en ce que l'alcool polyvinylique modifié a un degré de polymérisation de 100—3 000 et un degré de saponification de 80—99,5% molaires.

12. Liant selon la revendication 1, caractérisé en ce que le corps en céramique moulé vert est une bande en céramique verte obtenue par moulage de bande.

13. Liant selon la revendication 1, caractérisé en ce que le corps en céramique moulé vert est un corps en céramique moulé vert obtenu par moulage à la presse.

14. Liant selon la revendication 1, caractérisé en ce que le corps en céramique moulé vert est un corps en céramique vert obtenu par moulage par extrusion.

15. Composition pour produire des articles en céramique moulés, caractérisée en ce qu'elle comprend 100 parties de poudre céramique et 0,1 à 20 parties d'un liant comprenant un alcool polyvinylique modifié contenant soit (A) des groupes hydrophobes avec 4 atomes de carbone ou plus, soit (A) + (B) des groupes ioniques hydrophiles sur la chaîne latérale selon la revendication 1.